# EUROPEAN PATENT APPLICATION

(11) **EP 4 745 146 A1**
(43) Date of publication of application: **20.05.2026**
(21) Application number: 24839787.9
(22) Date of filing: 10.07.2024
(51) Int. Cl.: C07F 7/12, C07F 7/08, C07F 7/18

(54) **METHOD FOR PRODUCING COMPOUND, AND COMPOUND**

(30) Priority: 11.07.2023 JP 2023113782; 29.09.2023 JP 2023169671; 26.12.2023 JP 2023219204
(71) Applicant: FUJIFILM Corporation, Tokyo 106-8620 (JP)
(72) Inventor: OKUBO Megumi, Minamiashigara-shi, Kanagawa 250-0193 (JP); MACHIDA Takashi, Minamiashigara-shi, Kanagawa 250-0193 (JP); KODAMA Keisuke, Minamiashigara-shi, Kanagawa 250-0193 (JP); INADA Hiroshi, Minamiashigara-shi, Kanagawa 250-0193 (JP)
(74) Representative: HGF
(86) International application number: PCT/JP2024/024962
(87) International publication number: WO 2025/013897

(57) **Abstract**

An object of the present invention is to provide a method for producing a compound, which can easily produce an intermediate useful in producing a compound having a siloxane structure. The method for producing a compound according to the present invention includes step 1 of reacting a compound represented by Formula (1) with a compound represented by Formula (2) to obtain a compound represented by Formula (3), and step 2 of obtaining a compound represented by Formula (4) from the compound represented by Formula (3).

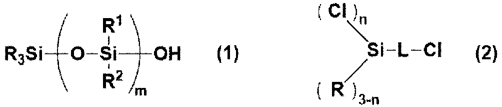

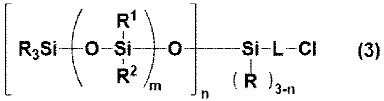

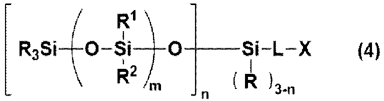

## Description

### BACKGROUND OF THE INVENTION

### 1. Field of the Invention

The present invention relates to a method for producing a compound and a compound.

### 2. Description of the Related Art

A compound containing a fluorine atom (for example, a compound containing a perfluoroalkyl group) has been used in various applications such as a surfactant, an alignment agent, a leveling agent, an antireflection agent, a surface treatment agent, and a water-repellent agent, from the viewpoint of characteristics such as water repellency, oil repellency, surface bias, low surface tension, low refractive index, and heat resistance. For example, JP2013-047204A discloses a compound containing a perfluoroalkyl group or a fluoroalkyl group, which can be used as an alignment agent, as such a compound.

### SUMMARY OF THE INVENTION

In recent years, the use of perfluoroalkyl compounds and polyfluoroalkyl compounds (PFAS) has been restricted due to the difficulty in decomposition and toxicity, and the demand for an alternative compound that does not use a fluorine atom has been increasing.

The present inventors have focused on a compound having a siloxane structure, which is a compound containing a Si atom, as such a compound, and have produced a compound having a siloxane structure by hydrosilylation, and have found that, in the above method, there are problems such as a large amount of by-products and an insufficient yield of a desired compound.

Therefore, an object of the present invention is to provide a method for producing a compound, which can easily produce an intermediate useful in producing a compound having a siloxane structure.

Another object of the present invention is to provide a compound that is produced by the above-described method for producing a compound.

As a result of conducting an extensive investigation to achieve the objects, the present inventors have found that the objects can be achieved by the following constitution.
[1] A method for producing a compound, comprising:
   step 1 of reacting a compound represented by Formula (1) described later with a compound represented by Formula (2) described later to obtain a compound represented by Formula (3) described later; and
   step 2 of obtaining a compound represented by Formula (4) described later from the compound represented by Formula (3).
[2] The method for producing a compound according to [1], further comprising:
   step 3 of reacting the compound represented by Formula (4) with a compound represented by Formula (5) described later to obtain a compound represented by Formula (6) described later.
[3] The method for producing a compound according to [1] or [2], in which L is an n-propylene group.
[4] The method for producing a compound according to any one of [1] to [3], in which R, R¹, and R² are a methyl group.
[5] A compound represented by Formula (7) described later.
[6] The compound according to [5], in which L is an n-propylene group.
[7] The compound according to [5] or [6], in which R, R¹, and R² are a methyl group.

According to the present invention, a method for producing a compound, which can easily produce an intermediate useful in producing a compound having a siloxane structure, can be provided.

In addition, according to the present invention, a compound useful in producing a compound having a siloxane structure can also be provided.

### DESCRIPTION OF THE PREFERRED EMBODIMENTS

Hereinafter, the present invention will be described in more detail.

The description of the configuration requirements described below may be made based on the representative embodiments of the present invention, but the present invention is not limited to those embodiments.

In the present specification, numerical ranges represented by "to" include numerical values before and after "to" as lower limit values and upper limit values.

In addition, in the present specification, in a case where there are two or more components corresponding to a certain component, "content" of such a component means the total content of the two or more components.

In the numerical range described stepwise in the present specification, the upper limit value or the lower limit value described in a certain numerical range may be replaced with the upper limit value or the lower limit value of another numerical range described stepwise. In addition, in the numerical range described in the present specification, an upper limit value and a lower limit value described in a certain numerical range may be replaced with values shown in Examples.

In the present specification, a combination of two or more preferred aspects is a more preferred aspect.

In the present specification, in a case where a plurality of identical symbols indicating a type or the number of groups are present in the formula, which indicates a chemical structure, contents of these plurality of identical symbols indicating a type or the number of groups are independent of each other, and the contents of the identical symbols may be the same or different from each other, unless otherwise specified.

In the present specification, in a case where a plurality of identical groups (for example, alkyl groups and the like) are present in the formula, which indicates a chemical structure, specific contents between these plurality of identical groups are independent of each other, and the specific contents between the plurality of identical groups may be the same or different from each other, unless otherwise specified.

A bonding direction of divalent groups cited in the present specification is not limited unless otherwise specified. For example, in a case where Y in a compound represented by Formula "X-Y-Z" is -COO-, Y may be -CO-O- or -O-CO-. In addition, the compound may be "X-CO-O-Z" or "X-O-CO-Z".

In the present specification, unless otherwise specified, after each reaction, a crude product obtained may be purified by one or more operations selected from washing, extraction, drying, filtration, concentration, recrystallization, reprecipitation, crystallization, centrifugation, adsorption, column purification, and sublimation purification, as necessary.

### [Method for producing compound]

Hereinafter, the method for producing a compound according to the present invention will be described in detail.

The method for producing a compound according to the present invention includes step 1 of reacting a compound represented by Formula (1) described later (also referred to as a "compound (1)") with a compound represented by Formula (2) described later (also referred to as a "compound (2)") to obtain a compound represented by Formula (3) described later (also referred to as a "compound (3)"), and step 2 of obtaining a compound represented by Formula (4) described later (also referred to as a "compound (4)") from the compound (3).

As a method for introducing a silicon atom into a compound, a hydrosilylation reaction of adding a hydrosilane to an unsaturated bond present in a predetermined compound is generally used. However, in a case where the hydrosilylation is applied to a compound having a site such as a carbonyl group, it is difficult to control a side reaction.

As described above, the method for producing a compound according to the present invention includes step 1 of reacting a compound (1) having a siloxane structure with a compound (2) to synthesize a compound (3). As a result, a desired siloxane structure that can have a branched structure can be easily formed. Further, the compound (4) obtained by converting the compound (3) by step 2 has a leaving group represented by X, which is linked to the siloxane structure obtained by step 1 by an alkylene group. Therefore, the compound (4) can easily and efficiently react with a functional group having nucleophilicity (for example, a carboxy group and a hydroxy group). That is, with the method for producing a compound according to the present invention, an intermediate compound that can synthesize a compound having a desired siloxane structure can be produced.

### [Step 1]

Step 1 is a step of reacting the compound (1) with the compound (2) to obtain the compound (3). Hereinafter, each compound and a specific procedure will be described in this order.

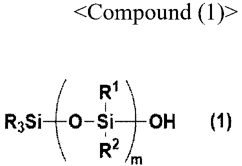

In Formula (1), R's each independently represent an alkyl group.

The alkyl group may be linear, branched, or cyclic, and is preferably linear.

The number of carbon atoms in the above-described alkyl group is preferably 1 to 10, more preferably 1 to 6, still more preferably 1 to 3, and preferably 1.

A plurality of R's may be the same or different from each other.

R is preferably a linear alkyl group having 1 to 6 carbon atoms, more preferably a linear alkyl group having 1 to 3 carbon atoms, and still more preferably a methyl group.

In Formula (1), R¹ and R² each independently represent an alkyl group or -(O-SiR³R⁴)₁-O-Si(R⁵)₃.

A suitable aspect of the alkyl group represented by R¹ and R² is the same as the above-described alkyl group represented by R.

In the group represented by -(O-SiR³R⁴)₁-O-Si(R⁵)₃ (hereinafter, also referred to as a "substituent SI"), l's each independently represent an integer of 0 or more.

l is preferably an integer of 0 to 20, more preferably an integer of 0 to 10, and still more preferably an integer of 0 to 6.

In the substituent SI, R³ to R⁵ each independently represent an alkyl group.

A suitable aspect of the alkyl group represented by R³ to R⁵ is the same as the above-described alkyl group represented by R.

R¹ and R² are preferably a linear alkyl group having 1 to 3 carbon atoms or a substituent SI in which R³ to R⁵ are a linear alkyl group having 1 to 3 carbon atoms, more preferably a linear alkyl group having 1 to 3 carbon atoms, and still more preferably a methyl group.

In Formula (1), m represents an integer of 0 or more.

m is preferably an integer of 0 to 20, more preferably an integer of 0 to 15, and still more preferably an integer of 0 to 10.

Examples of the compound (1) are shown below, but the present invention is not limited thereto. In the following examples, Et represents an ethyl group, and iPr represents an isopropyl group.

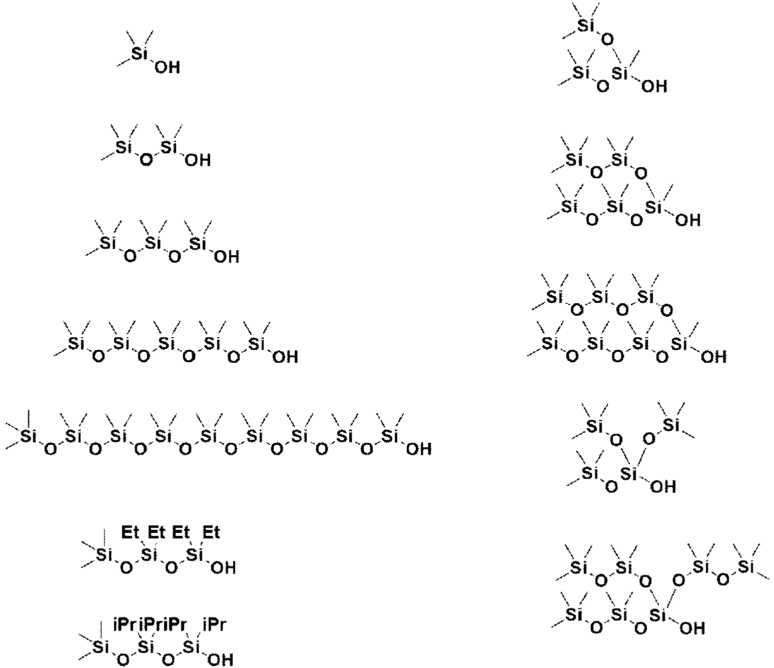

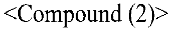

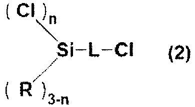

In Formula (2), R's each independently represent an alkyl group.

The definition and suitable aspect of R in Formula (2) are the same as those of R in Formula (1).

In Formula (2), L represents an alkylene group.

The above-described alkylene group may be linear, branched, or cyclic, but is preferably linear from the viewpoint of the reaction efficiency of step 1 and the availability of the raw material.

The alkylene group preferably has 1 to 10 carbon atoms, more preferably has 1 to 6 carbon atoms, still more preferably has 2 to 4 carbon atoms, and particularly preferably has 3 carbon atoms.

The above-described alkylene group is preferably a linear alkylene group having 1 to 6 carbon atoms, more preferably a linear alkylene group having 2 to 4 carbon atoms, and still more preferably an n-propylene group.

n represents an integer of 1 to 3.

Examples of the compound (2) are shown below, but the present invention is not limited thereto.

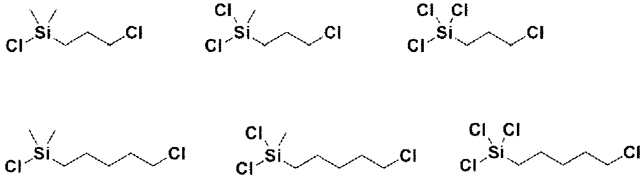

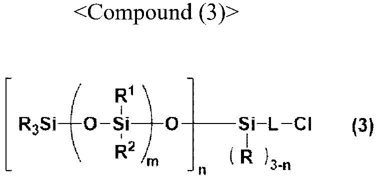

R, R¹, R², and m in Formula (3) are the same as R, R¹, R², and m in Formula (1), respectively, and n and L in Formula (3) are the same as n and L in Formula (2), respectively.

Examples of the compound (3) are shown below, but the present invention is not limited thereto. In the following examples, Et represents an ethyl group, and iPr represents an isopropyl group.

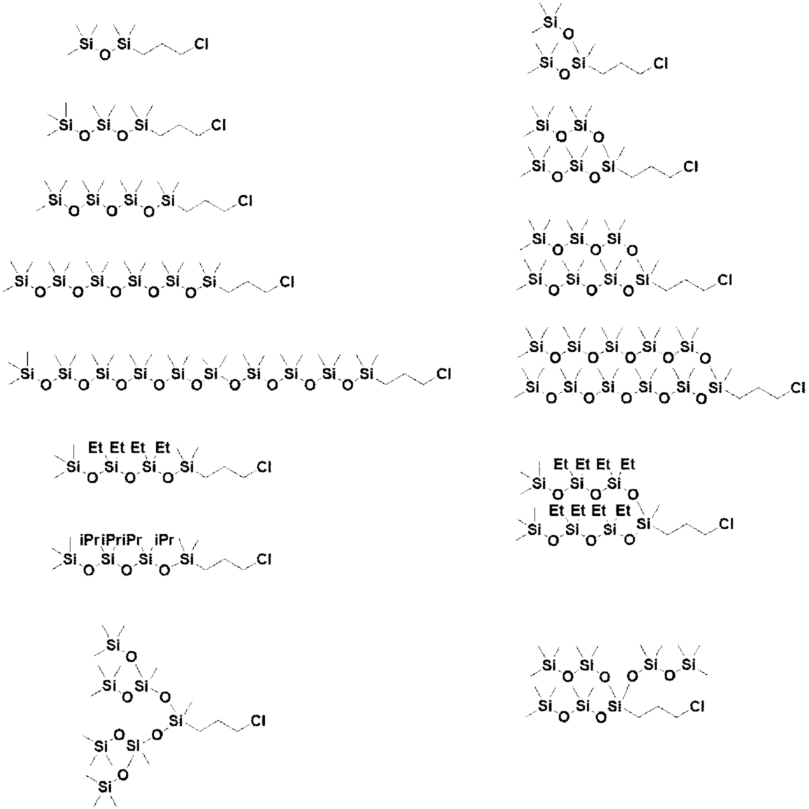

### <Procedure of step 1>

A specific procedure of step 1 is not particularly limited as long as the compound (3) is obtained from the compound (1) and the compound (2). For example, reaction conditions of a known nucleophilic substitution reaction in the related art can be appropriately adopted.

The reaction of step 1 is preferably carried out in a solvent.

The solvent is not particularly limited, and examples thereof include aromatic hydrocarbon solvents such as toluene and xylene, aliphatic hydrocarbon solvents such as pentane, hexane, heptane, octane, and cyclohexane, ketone solvents such as acetone, methyl ethyl ketone, and cyclopentanone, ether solvents such as ethylene glycol dimethyl ether, tetrahydrofuran, diethyl ether, and dioxane, ester solvents such as ethyl acetate and butyl acetate, non-protonic polar solvents such as acetonitrile, N,N-dimethylformamide, N,N-dimethylacetamide, and N-methylpyrrolidone, and chlorinated hydrocarbon solvents such as chloroform and dichloromethane.

The solvents may be used alone or in combination of two or more thereof.

The reaction of step 1 is preferably carried out in the presence of a base.

Examples of the base include an organic base and an inorganic base. Examples of the organic base include a nitrogen-containing aromatic heterocyclic compound such as pyridine and pyrimidine, a nitrogen-containing aliphatic compound such as triethylamine, trimethylamine, N,N-diisopropylethylamine, and 1,8-diazabicyclo[5.4.0]-7-undecene (DBU), and a metal alkoxide such as potassium tert-butoxide. Examples of the inorganic base include sodium carbonate, sodium hydrogen carbonate, potassium carbonate, cesium carbonate, sodium hydroxide, potassium hydroxide, cesium hydroxide, sodium phosphate, potassium phosphate, and sodium acetate.

The amounts of the compound (1) and the compound (2) used are not particularly limited, but the amount of the compound (1) used is preferably 1n to 2n moles, more preferably 1n to 1.5n moles, and still more preferably 1n to 1.2n moles with respect to 1 mole of the compound (2). It is noted that n is n in Formula (2), and in a case where, for example, n = 2, the amount of the compound (1) used is preferably 2 to 4 moles, more preferably 2 to 3 moles, and still more preferably 2 to 2.4 moles with respect to 1 mole of the compound (2).

A reaction temperature can be appropriately adjusted depending on the compound and the solvent used, and is preferably -20 to 50°C and more preferably 0 to 30°C.

A reaction time can be appropriately adjusted depending on the compound and the solvent used, and is preferably 0.5 to 10 hours and more preferably 1 to 5 hours.

### [Step 2]

Step 2 is a step of obtaining the compound (4) from the compound (3). Hereinafter, the compound (4) and a specific procedure will be described in this order.

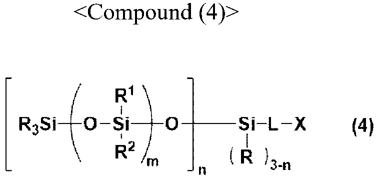

R, R¹, R², m, n, and L in Formula (4) are the same as R, R¹, R², m, n, and L in Formula (3), respectively.

X represents a bromine atom or an iodine atom.

From the viewpoint of more excellent reactivity of the compound represented by Formula (4), X is preferably an iodine atom.

Examples of the compound (4) include compounds represented by Formulae (4-1) to (4-3).

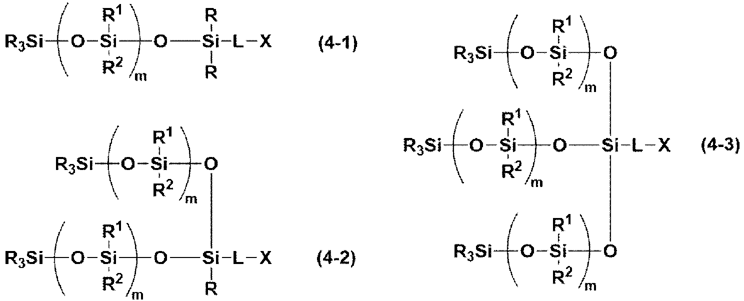

R, R¹, R², m, L, and X in Formulae (4-1) to (4-3) are the same as R, R¹, R², m, L, and X in Formula (4), respectively.

As described above, in the compound (4), the group represented by X can function as a leaving group. Therefore, for example, the compound (4) is useful as an intermediate for easily introducing a siloxane structure into a compound including a functional group having nucleophilicity (for example, a carboxy group and a hydroxy group).

It is noted that the compound represented by Formula (4) may be used for an application other than the intermediate.

Examples of the compound (4) are shown below, but the present invention is not limited thereto. In the following examples, Et represents an ethyl group, and iPr represents an isopropyl group.

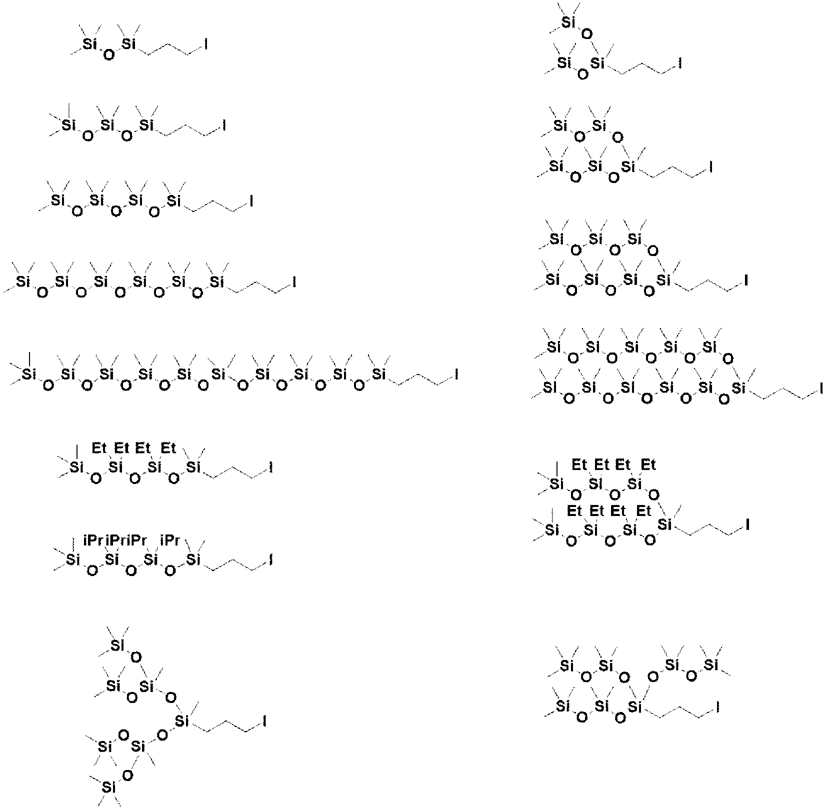

### <Procedure of step 2>

A specific procedure of step 2 is not particularly limited as long as the compound (4) is obtained from the compound (3). For example, conditions of a known conversion reaction of a leaving group in the related art can be appropriately adopted.

Specific examples thereof include a method for reacting the compound (4) with an iodide or a bromide.

Examples of the above-described iodide include iodine metal such as sodium iodide, potassium iodide, calcium iodide, and magnesium iodide. Examples of the above-described bromide include bromine metal such as sodium bromide, potassium bromide, calcium bromide, and magnesium bromide.

The amount of the iodide or the bromide used is not particularly limited, but is, for example, preferably 1 to 20 moles and more preferably 1.5 to 15 moles with respect to 1 mole of the compound (3).

The above-described reaction is preferably carried out in a solvent.

The above-described solvent, for example, the solvent used in the above-described step 1 can be used.

A reaction temperature can be appropriately adjusted depending on the compound and the solvent used, and is preferably 30 to 150°C and more preferably 60 to 100°C.

A reaction time can be appropriately adjusted depending on the compound and the solvent used, and is preferably 1 to 48 hours and more preferably 3 to 30 hours.

### [Use]

The method for producing a compound according to the present invention is preferably used for producing a compound having a siloxane structure. In other words, the compound (4) produced by the method for producing a compound according to the present invention is preferably used for producing a compound having a siloxane structure.

For example, a compound having a siloxane structure can be produced by a nucleophilic substitution reaction between the compound (4) and a compound including a functional group having nucleophilicity such as a hydroxy group or a carboxy group.

Examples of the use of the method for producing a compound according to the present invention include a method for producing a compound having a siloxane structure and an aromatic ring by Step 3 shown below.

### [Step 3]

Step 3 is a step of reacting the compound (4) with a compound represented by Formula (5) (also referred to as a "compound (5)") to obtain a compound represented by Formula (6) (also referred to as a "compound (6)"). Hereinafter, each compound and a specific procedure will be described in this order.

### <Compound (5)>

**Yₚ-Ar-A_{q}** **(5)**

In Formula (5), Ar represents an aromatic ring.

The above-described aromatic ring may be monocyclic or polycyclic.

The above-described aromatic ring may be any of an aromatic hydrocarbon ring or an aromatic heterocyclic ring.

The number of ring member atoms in the aromatic ring is preferably 5 to 20, more preferably 5 to 12, and still more preferably 6 to 10.

Examples of the aromatic ring include aromatic hydrocarbon rings such as a benzene ring, a naphthalene ring, an anthracene ring, a pyrene ring, a phenanthrene ring, and a fluorene ring, and aromatic heterocyclic rings such as a pyridine ring, a pyrimidine ring, a pyridazine ring, a pyrazine ring, a triazine ring, a tetrazine ring, a quinoxaline ring, a pyrrole ring, a furan ring, a thiophene ring, an imidazole ring, an oxazole ring, a thiazole ring, a benzopyrrole ring, a benzofuran ring, a benzothiophene ring, a benzimidazole ring, a benzoxazole ring, a benzothiazole ring, a naphthopyrrole ring, a naphthofuran ring, a naphthothiophene ring, a naphthoimidazole ring, a naphthoxazole ring, a pyrroloimidazole ring, an imidazooxazole ring, a thienothiazole ring, a benzothiadiazole ring, a benzodithiophene ring, a thienothiophene ring, a thiazolothiazole ring, a naphthodithiophene ring, and a benzothienobenzothiophene ring; and a benzene ring, a naphthalene ring, an anthracene ring, a pyridine ring, a pyrimidine ring, a pyrrole ring, a furan ring, or a thiophene ring is preferable, and a benzene ring is more preferable.

In Formula (5), Y's each independently represent a hydroxy group or a carboxy group.

In a case where a plurality of Y's are present, it is preferable that the plurality of Y's are the same group. That is, in Formula (5), it is preferable that all of the p Y's present represent a hydroxy group or all of the p Y's present represent a carboxy group.

In Formula (5), p represents an integer of 1 or more.

p is preferably 1 to 6, more preferably 1 to 3, and still more preferably 1 or 2.

In Formula (5), A's each independently represent a substituent other than a carboxy group. However, in a case where A represents a hydroxy group, Y represents a carboxy group.

Examples of the substituent represented by A, other than a carboxy group, include a halogen atom, an alkyl group, an alkenyl group, an alkynyl group, an aryl group, a heterocyclic group, a hydroxy group, an alkoxy group, an amino group, an aryloxy group, a formyl group, an acyl group, an alkoxycarbonyl group, an aryloxycarbonyl group, an acyloxy group, an acylamino group, an aminocarbonylamino group, an alkoxycarbonylamino group, an aryloxycarbonylamino group, an alkylsulfonylamino group, an arylsulfonylamino group, an alkylthio group, an arylthio group, an alkylsulfinyl group, an arylsulfinyl group, an alkylsulfonyl group, an arylsulfonyl group, a silyloxy group, a heterocyclic oxy group, a carbamoyl group, a carbamoyloxy group, a heterocyclic thio group, a sulfamoyl group, an arylazo group, a heterocyclic azo group, an imide group, a phosphino group, a phosphinyl group, a phosphinyloxy group, a phosphinylamino group, a hydrazino group, an imino group, a cyano group, a nitro group, a mercapto group, a sulfo group, a hydroxamic acid group, a sulfino group, a boronate group (-B(OH)₂), a phosphato group (-OPO(OH)₂), a phosphono group (-PO(OH)₂), and a sulfato group (-OSO₃H). In addition, the substituent may further have a substituent exemplified as the substituent.

Among these, the substituent is preferably a hydroxy group, a formyl group, an acyl group, an alkyl group, or a halogen atom.

In Formula (5), q represents an integer of 0 or more.

q is preferably 0 to 6 and more preferably 0 to 3.

Examples of the compound (5) are shown below, but the present invention is not limited thereto.

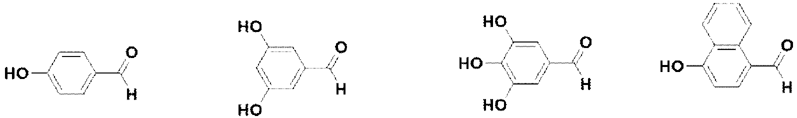

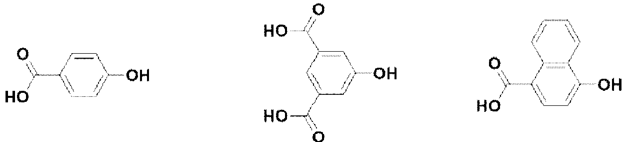

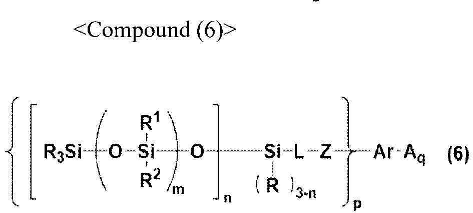

R, R¹, R², m, n, and L in Formula (6) are the same as R, R¹, R², m, n, and L in Formula (4), respectively, and p, Ar, A, and q in Formula (6) are the same as p, Ar, A, and q in Formula (5), respectively.

In Formula (6), Z represents -O- or -OCO-.

In Formula (5), in a case where Y is a hydroxy group, Z is -O-, and in a case where Y is a carboxy group, Z is -OCO-.

The use of the compound represented by Formula (6) is not particularly limited, and for example, the compound may be used as a surfactant or a surface modifier, or may be used as an intermediate.

Examples of the compound (6) are shown below, but the present invention is not limited thereto. In the following examples, Et represents an ethyl group, and iPr represents an isopropyl group.

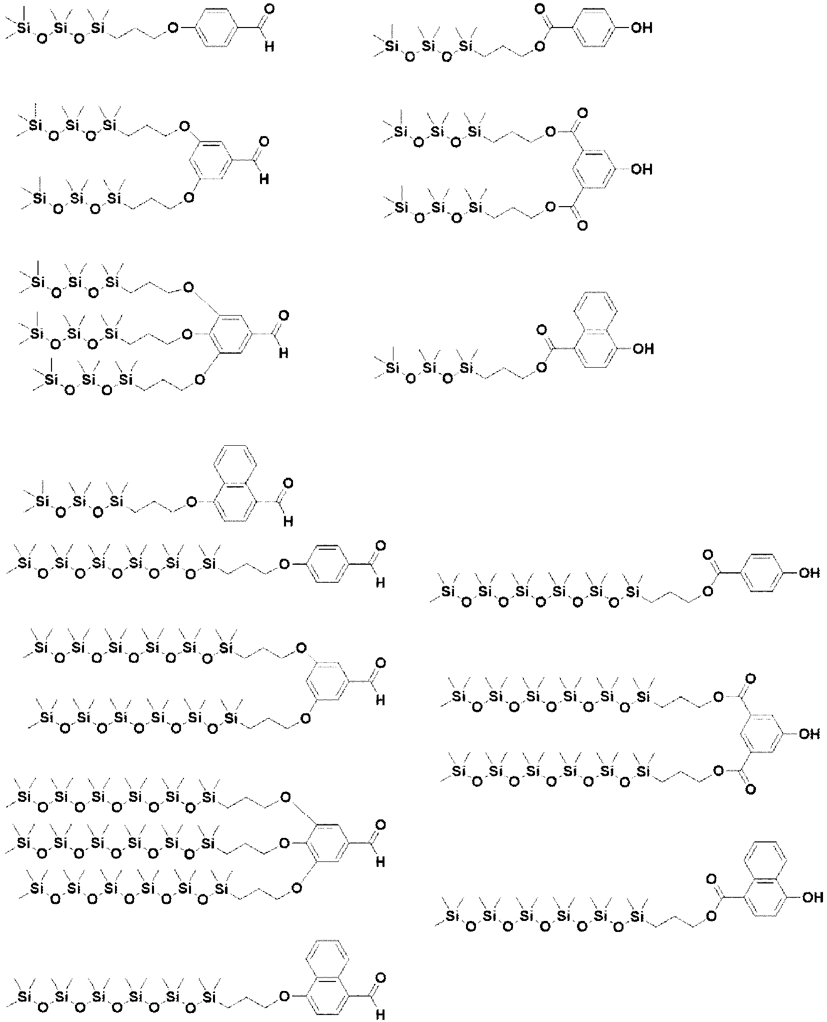

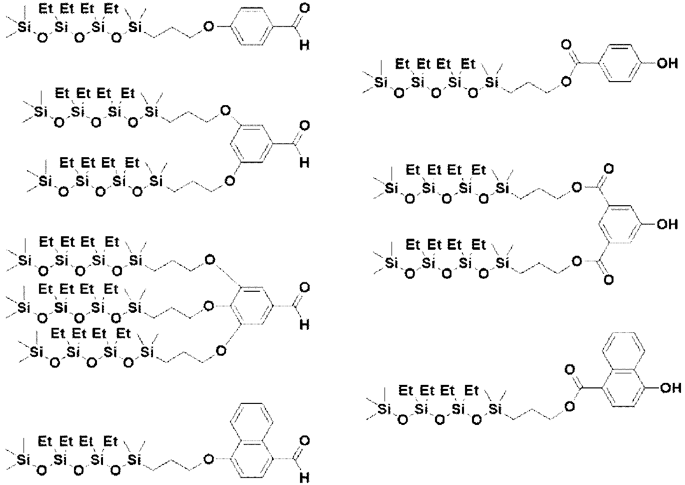

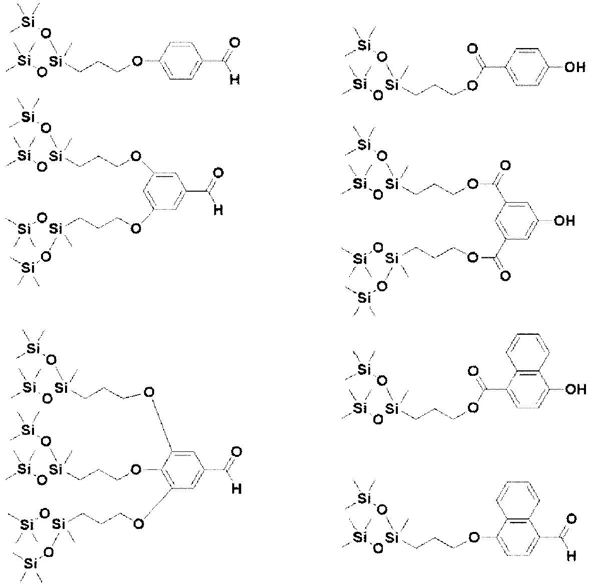

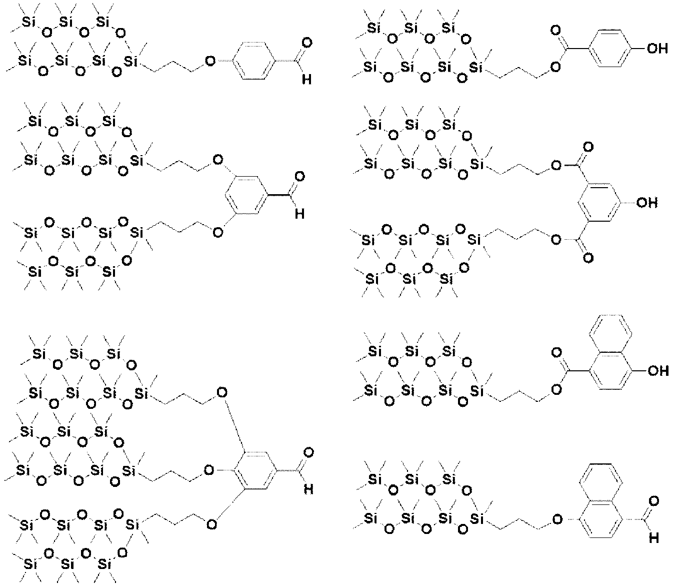

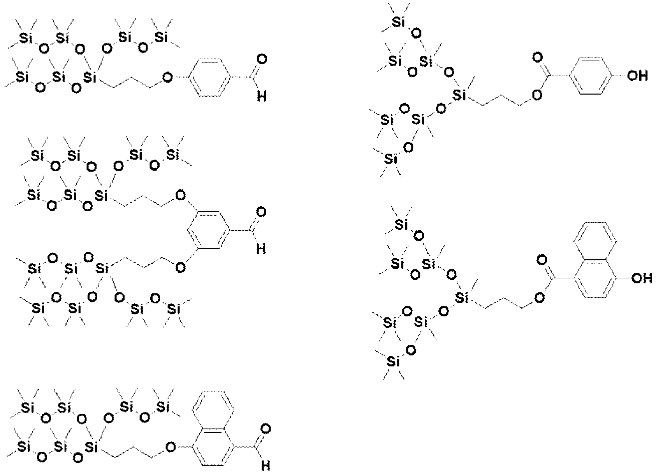

### <Procedure of step 3>

A specific procedure of step 3 is not particularly limited as long as the compound (6) is obtained from the compound (4) and the compound (5). For example, reaction conditions of a known nucleophilic substitution reaction in the related art can be appropriately adopted.

The reaction of step 3 is preferably carried out in a solvent.

Examples of the above-described solvent include a solvent that can be used in the above-described step 1.

The reaction of step 3 is preferably carried out in the presence of a base. Examples of the base include a base that can be used in the above-described step 1.

The amounts of the compound (5) and the compound (4) used are not particularly limited, but the amount of the compound (4) used is preferably 1p to 2p moles, more preferably 1p to 1.5p moles, and still more preferably 1p to 1.2p moles with respect to 1 mole of the compound (5). It is noted that p is p in Formula (5), and in a case where, for example, p = 2, the amount of the compound (4) used is preferably 2 to 4 moles, more preferably 2 to 3 moles, and still more preferably 2 to 2.4 moles with respect to 1 mole of the compound (5).

A reaction temperature can be appropriately adjusted depending on the compound and the solvent used, and is preferably carried out at 20 to 150°C, more preferably carried out at 40 to 100°C, and still more preferably carried out at 50 to 80°C.

A reaction time can be appropriately adjusted depending on the compound and the solvent used, and is preferably 1 to 48 hours and more preferably 5 to 24 hours.

The reaction in a case where the compound (4) produced by the method for producing a compound according to the present invention is used as an intermediate is not limited to step 3, and may be used for a reaction with a compound other than the compound (5).

The use of the compound having a siloxane structure obtained by using the compound (4) as an intermediate is not particularly limited, and examples thereof include a surfactant, a leveling agent, a surface treatment agent, an alignment agent, an antireflection agent, and a water-repellent agent.

### [Compound]

The present invention includes an invention of a compound represented by Formula (7).

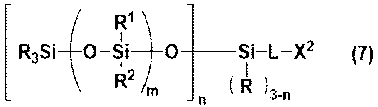

In Formula (7), the definitions and suitable aspects of R, R¹, R², m, n, and L are the same as those of R, R¹, R², m, n, and L in Formula (3), respectively.

In Formula (7), X² represents a chlorine atom, a bromine atom, or an iodine atom.

In Formula (7), m is also preferably an integer of 1 or more, more preferably an integer of 1 to 20, still more preferably an integer of 1 to 15, and particularly preferably an integer of 1 to 10.

Among these, in a case where X² is a chlorine atom, it is preferable that m satisfies the above-described suitable range.

Examples of the compound represented by Formula (7) include the compound represented by Formula (3) and the compound represented by Formula (4).

### Examples

Hereinbelow, the present invention will be described in more detail with reference to Examples.

The materials, the amounts of materials used, the proportions, the treatment details, the treatment procedure, and the like shown in Examples below may be modified as appropriate as long as the modifications do not depart from the spirit of the present invention. Therefore, the scope of the present invention should not be construed as being limited to Examples shown below.

It is noted that the abbreviations used in the following description are as follows.
DMF: N,N-dimethylformamide
DMAc: N,N-dimethylacetamide
DIPEA: N,N-diisopropylethylamine
THF: tetrahydrofuran

Compounds A-1 to A-7 were synthesized according to the following procedure.

### [Synthesis Example]

### (Synthesis of Compound a-1)

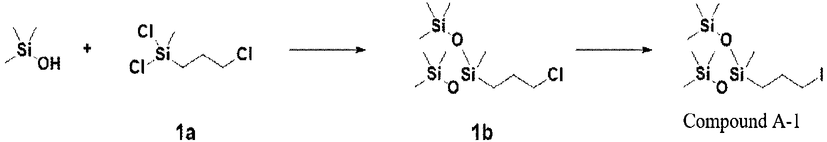

### <Step 1>

A tetrahydrofuran solution of a compound 1a (26.1 mmol) was added dropwise to a solution obtained by dissolving trimethylsilyl alcohol (54.8 mmol) and pyridine (54.8 mmol) in tetrahydrofuran (50 mL) under ice cooling, and the mixture was stirred at room temperature for 1 hour. After stirring, the obtained reaction suspension was filtered, and hexane and water were added thereto to perform a liquid-liquid separation treatment. The solvent was distilled off to obtain a compound 1b (yield: 91%). The ¹H NMR measurement results of the compound 1b are shown below.

¹H NMR (400 MHz, CDCl₃) δ ppm: 0.03 (s, 3H), 0.10 (s, 18H), 0.55 to 0.59 (m, 2H), 1.75 to 1.83 (m, 2H), 3.51 (t, 2H)

### <Step 2>

The compound 1b (26.1 mmol) and sodium iodide (261 mmol) were dissolved in acetone (94 mL), and the mixture was stirred at 60°C for 27 hours. After stirring, the obtained reaction suspension was filtered, and hexane and water were added thereto to perform a liquid-liquid separation treatment. The solvent was distilled off, and the residue was purified by silica gel column chromatography (hexane/ethyl acetate = 19/1) to obtain a compound A-1 (yield: 63%). The ¹H NMR measurement results of the compound A-1 are shown below.

¹H NMR (400 MHz, CDCl₃) δ ppm: 0.02 (s, 3H), 0.94 (s, 18H), 0.54 to 0.58 (m, 2H), 1.82 to 1.88 (m, 2H), 3.19 (t, 2H)

### [Synthesis of Compound A-2]

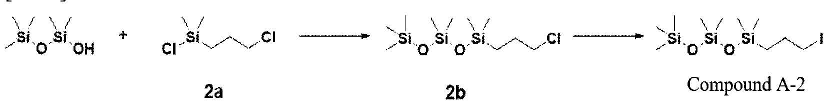

### <Step 1>

A tetrahydrofuran solution of a compound 2a (19.1 mmol) was added dropwise to a solution obtained by dissolving 1,1,3,3,3-pentamethyl-1-disiloxanol (21.0 mmol) and pyridine (21.0 mmol) in tetrahydrofuran (30 mL) under ice cooling, and the mixture was stirred at room temperature for 2 hours. After stirring, the obtained reaction suspension was filtered, and hexane and water were added thereto to perform a liquid-liquid separation treatment. The solvent was distilled off, and the residue was purified by silica gel column chromatography (hexane/ethyl acetate = 19/1) to obtain a compound 2b (yield: 72%). The ¹H NMR measurement results of the compound 2b are shown below.

¹H NMR (400 MHz, CDCl₃) δ ppm: 0.03 (s, 6H), 0.08 (s, 9H), 0.09 (s, 6H), 0.62 to 0.65 (m, 2H), 1.78 to 1.83 (m, 2H), 3.51 (t, 2H)

### <Step 2>

The compound 2b (13.7 mmol) and sodium iodide (137 mmol) were dissolved in acetone (51 mL), and the mixture was stirred at 60°C for 26 hours. After stirring, the obtained reaction suspension was filtered, and hexane and water were added thereto to perform a liquid-liquid separation treatment. The solvent was distilled off, and the residue was purified by silica gel column chromatography (hexane/ethyl acetate = 19/1) to obtain a compound A-2 (yield: 80%). The ¹H NMR measurement results of the compound A-2 are shown below.

¹H NMR (400 MHz, CDCl₃) δ ppm: 0.04 (s, 6H), 0.09 (s, 9H), 0.10 (s, 6H), 0.62 to 0.66 (m, 2H), 1.83 to 1.91 (m, 2H), 3.20 (t, 2H)

### [Synthesis of Compound A-3]

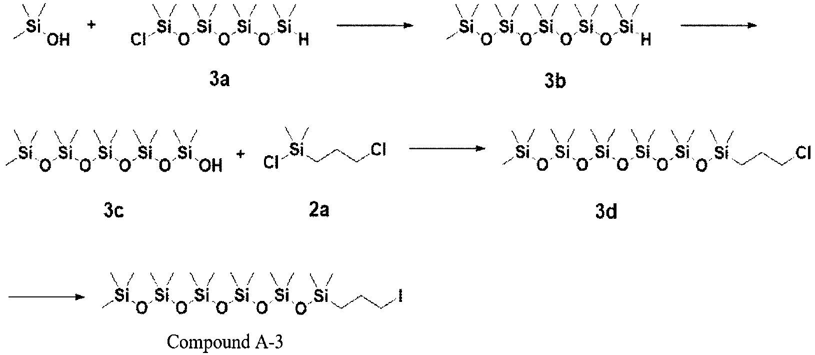

### <Synthesis of raw materials>

A toluene solution of a compound 3a (31.5 mmol) was added dropwise to a solution obtained by dissolving trimethylsilyl alcohol (34.7 mmol) and pyridine (34.7 mmol) in toluene (50 mL) under ice cooling, and the mixture was stirred at room temperature for 1 hour. After stirring, the obtained reaction suspension was filtered, and hexane and water were added thereto to perform a liquid-liquid separation treatment. The solvent was distilled off to obtain a compound 3b (yield: 94%).

Water (40.3 mmol) was added to an ethyl acetate suspension of Pd/C (0.134 mmol), a solution of the compound 3b (13.4 mmol) in ethyl acetate was added dropwise thereto under ice cooling, and the mixture was stirred at room temperature for 5 hours. After stirring, the obtained reaction suspension was filtered through Celite, and the solvent was distilled off to obtain a compound 3c (yield: 98%).

### <Step 1>

A toluene solution of the compound 2a (16.4 mmol) was added dropwise to a solution obtained by dissolving the compound 3c (17.2 mmol) and pyridine (24.5 mmol) in toluene (28 mL) under ice cooling, and the mixture was stirred at room temperature for 1 hour. After stirring, the obtained reaction suspension was filtered, and hexane and water were added thereto to perform a liquid-liquid separation treatment. The solvent was distilled off, and the residue was purified by silica gel column chromatography (hexane/ethyl acetate = 9/1) to obtain a compound 3d (yield: 72%). The ¹H NMR measurement results of the compound 3d are shown below.

¹H NMR (400 MHz, CDCl₃) δ ppm: 0.05 to 0.09 (m, 39H), 0.62 to 0.66 (m, 2H), 1.76 to 1.84 (m, 2H), 3.51 (t, 2H)

### <Step 2>

The compound 3d (11.7 mmol) and sodium iodide (117 mmol) were dissolved in acetone (75 mL), and the mixture was stirred at 60°C for 24 hours. After stirring, the obtained reaction suspension was filtered, and hexane and water were added thereto to perform a liquid-liquid separation treatment. The solvent was distilled off, and the residue was purified by silica gel column chromatography (hexane/ethyl acetate = 12/1) to obtain a compound A-3 (yield: 83%). The ¹H NMR measurement results of the compound A-3 are shown below.

¹H NMR (400 MHz, CDCl₃) δ ppm: 0.05 to 0.09 (m, 39H), 0.61 to 0.66 (m, 2H), 1.82 to 1.90 (m, 2H), 3.19 (t, 2H)

### (Synthesis of Compound A-4)

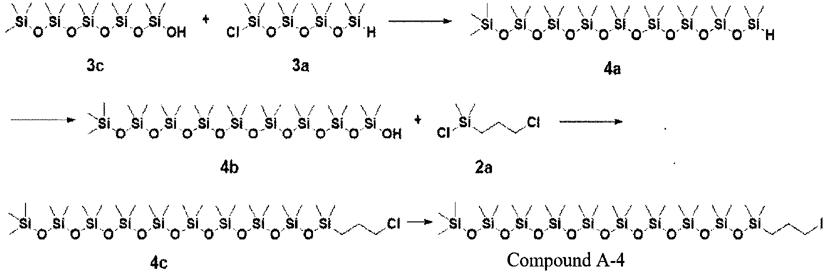

### <Synthesis of raw materials>

A toluene solution of the compound 3a (30.9 mmol) was added dropwise to a solution obtained by dissolving the compound 3c (32.5 mmol) and pyridine (34.0 mmol) in toluene (49 mL) under ice cooling, and the mixture was stirred at room temperature for 2 hours. After stirring, the obtained reaction suspension was filtered, and hexane and water were added thereto to perform a liquid-liquid separation treatment. The solvent was distilled off to obtain a compound 4a (yield: 99%).

Water (89.7 mmol) was added to an ethyl acetate suspension of Pd/C (0.762 mmol), a solution of the compound 4a (29.9 mmol) in ethyl acetate was added dropwise thereto under ice cooling, and the mixture was stirred at room temperature for 5 hours. After stirring, the obtained reaction suspension was filtered through Celite, and the solvent was distilled off, and the residue was purified by silica gel column chromatography (hexane/ethyl acetate = 4/1) to obtain a compound 4b (yield: 47%).

### <Step 1>

A toluene solution of the compound 2a (13.4 mmol) was added dropwise to a solution obtained by dissolving the compound 4b (14.1 mmol) and pyridine (20.2 mmol) in toluene (23 mL) under ice cooling, and the mixture was stirred at room temperature for 1 hour. After stirring, the obtained reaction suspension was filtered, and hexane and water were added thereto to perform a liquid-liquid separation treatment. The solvent was distilled off, and the residue was purified by silica gel column chromatography (hexane/ethyl acetate = 9/1) to obtain a compound 4c (yield: 80%). The ¹H NMR measurement results of the compound 4c are shown below.

¹H NMR (400 MHz, CDCl₃) δ ppm: 0.05 to 0.09 (m, 63H), 0.62 to 0.66 (m, 2H), 1.76 to 1.84 (m, 2H), 3.51 (t, 2H)

### <Step 2>

The compound 4c (11.7 mmol) and sodium iodide (117 mmol) were dissolved in acetone (75 mL), and the mixture was stirred at 60°C for 24 hours. After stirring, the obtained reaction suspension was filtered, and hexane and water were added thereto to perform a liquid-liquid separation treatment. The solvent was distilled off, and the residue was purified by silica gel column chromatography (hexane/ethyl acetate = 12/1) to obtain a compound A-4 (yield: 83%). The ¹H NMR measurement results of the compound A-4 are shown below.

¹H NMR (400 MHz, CDCl₃) δ ppm: 0.05 to 0.09 (m, 63H), 0.61 to 0.65 (m, 2H), 1.82 to 1.90 (m, 2H), 3.19 (t, 2H)

### (Synthesis of Compound A-5)

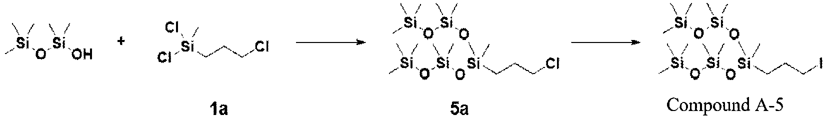

### <Step 1>

A tetrahydrofuran solution of a compound 1a (7.31 mmol) was added dropwise to a solution obtained by dissolving 1,1,3,3,3-pentamethyl-1-disiloxanol (15.3 mmol) and pyridine (15.3 mmol) in tetrahydrofuran (14 mL) under ice cooling, and the mixture was stirred at room temperature for 1 hour. After stirring, the obtained reaction suspension was filtered, and hexane and water were added thereto to perform a liquid-liquid separation treatment. The solvent was distilled off to quantitatively obtain a compound 5a. The ¹H NMR measurement results of the compound 5a are shown below.

¹H NMR (400 MHz, CDCl₃) δ ppm: 0.05 to 0.11 (m, 33H), 0.59 to 0.63 (m, 2H), 1.78 to 1.86 (m, 2H), 3.51 (t, 2H)

### <Step 2>

The compound 5a (14.6 mmol) and sodium iodide (146 mmol) were dissolved in acetone (78 mL), and the mixture was stirred at 60°C for 27 hours. After stirring, the obtained reaction suspension was filtered, and hexane and water were added thereto to perform a liquid-liquid separation treatment. The solvent was distilled off to obtain a compound A-5 (yield: 86%). The ¹H NMR measurement results of the compound A-5 are shown below.

¹H NMR (400 MHz, CDCl₃) δ ppm: 0.06 to 0.10 (m, 33H), 0.59 to 0.63 (m, 2H), 1.84 to 1.92 (m, 2H), 3.19 (t, 2H)

### (Synthesis of Compound A-6)

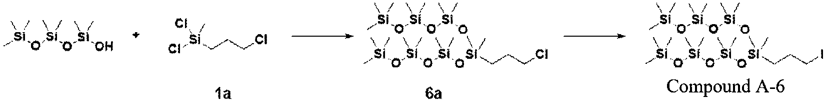

### <Step 1>

A toluene solution of a compound 1a (9.5 mmol) was added dropwise to a solution obtained by dissolving 1,1,3,3,5,5,5-heptamethyl-1-trisiloxanol (19.5 mmol) and pyridine (20.0 mmol) in toluene (18 mL) under ice cooling, and the mixture was stirred at room temperature for 1 hour. After stirring, the obtained reaction suspension was filtered, and hexane and water were added thereto to perform a liquid-liquid separation treatment. The solvent was distilled off to obtain a compound 6a (yield: 96%). The ¹H NMR measurement results of the compound 6a are shown below.

¹H NMR (400 MHz, CDCl₃) δ ppm: 0.05 to 0.11 (m, 45H), 0.63 to 0.65 (m, 2H), 1.79 to 1.87 (m, 2H), 3.51 (t, 2H)

### <Step 2>

The compound 6a (9.1 mmol) and sodium iodide (91.1 mmol) were dissolved in acetone (78 mL), and the mixture was stirred at 60°C for 26 hours. After stirring, the obtained reaction suspension was filtered, and hexane and water were added thereto to perform a liquid-liquid separation treatment. The solvent was distilled off, and the residue was purified by silica gel column chromatography (hexane/ethyl acetate = 12/1) to obtain a compound A-6 (yield: 87%). The ¹H NMR measurement results of the compound A-6 are shown below.

¹H NMR (400 MHz, CDCl₃) δ ppm: 0.05 to 0.09 (m, 45H), 0.59 to 0.63 (m, 2H), 1.83 to 1.91 (m, 2H), 3.19 (t, 2H)

### (Synthesis of Compound A-7)

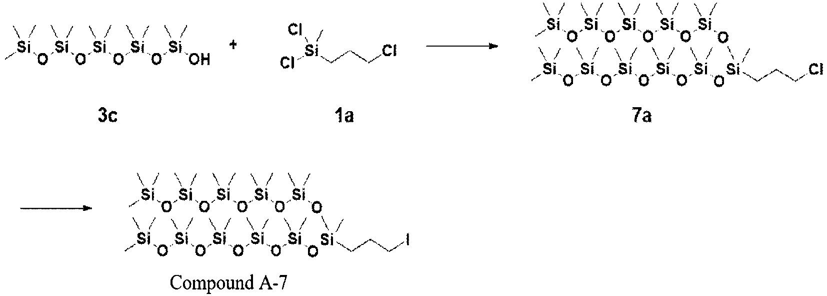

### <Step 1>

A toluene solution of a compound 1a (6.3 mmol) was added dropwise to a solution obtained by dissolving the compound 3c (13.2 mmol) and pyridine (13.2 mmol) in toluene (12 mL) under ice cooling, and the mixture was stirred at room temperature for 2 hours. After stirring, the obtained reaction suspension was filtered, and hexane and water were added thereto to perform a liquid-liquid separation treatment. The solvent was distilled off, and the residue was purified by silica gel column chromatography (hexane/ethyl acetate = 6/1) to obtain a compound 7a (yield: 90%). The ¹H NMR measurement results of the compound 7a are shown below.

¹H NMR (400 MHz, CDCl₃) δ ppm: 0.05 to 0.10 (m, 69H), 0.60 to 0.64 (m, 2H), 1.80 to 1.84 (m, 2H), 3.50 (t, 2H)

### <Step 2>

The compound 7a (5.7 mmol) and sodium iodide (56.5 mmol) were dissolved in acetone (64 mL), and the mixture was stirred at 60°C for 41 hours. After stirring, the obtained reaction suspension was filtered, and hexane and water were added thereto to perform a liquid-liquid separation treatment. The solvent was distilled off, and the residue was purified by silica gel column chromatography (hexane/ethyl acetate = 6/1) to obtain a compound A-7 (yield: 64%). The ¹H NMR measurement results of the compound A-7 are shown below.

¹H NMR (400 MHz, CDCl₃) δ ppm: 0.05 to 0.09 (m, 69H), 0.59 to 0.63 (m, 2H), 1.83 to 1.89 (m, 2H), 3.18 (t, 2H)

### [Example 1]

A compound D-2 was synthesized according to the following procedure.

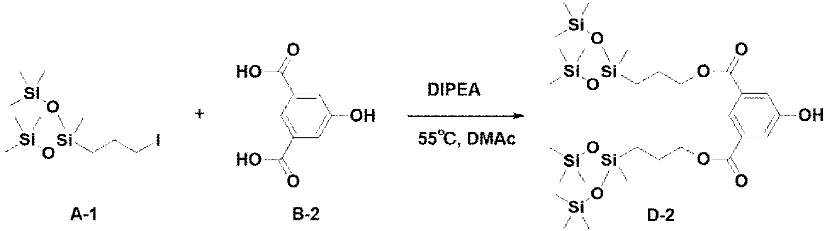

The compound A-1 (46.1 mmol) was added to a solution obtained by dissolving the compound B-2 (21.9 mmol) and DIPEA (48.3 mmol) in DMAc (40 mL), and the mixture was stirred at 55°C for 24 hours. After stirring, ethyl acetate, a hydrochloric acid aqueous solution, and a saline solution were added to the obtained reaction solution to perform a liquid-liquid separation treatment, the solvent was distilled off, and the residue was purified by silica gel column chromatography (hexane/ethyl acetate = 9/1) to obtain a compound D-2 (yield: 64%). The ¹H NMR measurement results of the compound D-2 are shown below.

¹H NMR (400 MHz, CDCl₃) δ ppm: 0.04 to 0.10 (m, 42H), 0.52 to 0.57 (m, 4H), 1.75 to 1.82 (m, 4H), 4.28 (t, 4H), 7.72 (d, 2H), 8.27 (t, 1H)

### [Example 2]

A compound D-3 was synthesized according to the following procedure.

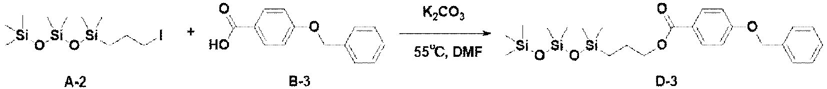

The compound A-2 (5.2 mmol) was added to a solution obtained by dissolving the compound B-3 (4.7 mmol) and potassium carbonate (7.0 mmol) in DMF (23 mL), and the mixture was stirred at 55°C for 24 hours. After stirring, ethyl acetate, a hydrochloric acid aqueous solution, and a saline solution were added to the obtained reaction solution to perform a liquid-liquid separation treatment, the solvent was distilled off, and the residue was purified by silica gel column chromatography (hexane/ethyl acetate = 9/1) to obtain a compound D-3 (yield: 63%). The ¹H NMR measurement results of the compound D-3 are shown below.

¹H NMR (400 MHz, CDCl₃) δ ppm: 0.04 to 0.10 (m,21H), 0.52 to 0.56 (m, 2H), 1.76 to 1.83 (m, 2H), 4.28 (t, 2H), 5.12 (s, 2H), 6.99 (d, 2H), 7.32 to 7.42 (m, 5H), 8.00 (d, 2H)

### [Example 3]

A compound D-4 was synthesized according to the following procedure.

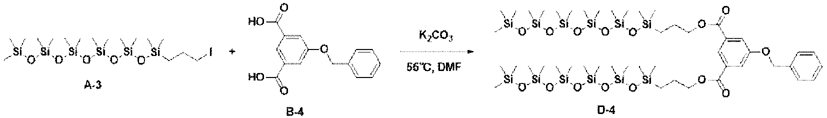

A compound D-4 was synthesized according to the same procedure as in the above-described [Synthesis of compound D-3], except that the compound A-2 was changed to the compound A-3 and the compound B-3 was changed to the compound B-4. The ¹H NMR measurement results of the compound D-4 are shown below.

¹H NMR (400 MHz, CDCl₃) δ ppm: 0.05 to 0.09 (m, 78H), 0.52 to 0.56 (m, 4H), 1.76 to 1.83 (m, 4H), 4.28 (t, 4H), 5.12 (s, 2H), 7.32 to 7.47 (m, 5H), 7.74 (t, 2H), 8.27 (t, 1H)

### [Example 4]

A compound D-5 was synthesized according to the following procedure.

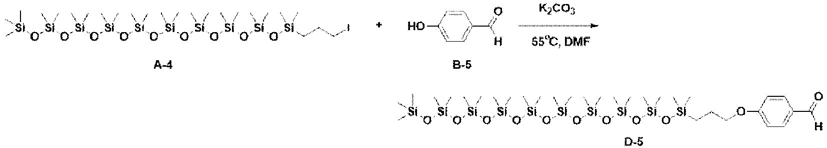

A compound D-5 was synthesized according to the same procedure as in the above-described [Synthesis of compound D-3], except that the compound A-2 was changed to the compound A-4 and the compound B-3 was changed to the compound B-5. The ¹H NMR measurement results of the compound D-5 are shown below.

¹H NMR (400 MHz, CDCl₃) δ ppm: 0.05 to 0.09 (m, 63H), 0.56 to 0.61 (m, 2H), 1.80 to 1.87 (m, 2H), 4.00 (t, 2H), 6.98 (d, 2H), 7.82 (d, 2H), 9.87 (s, 1H)

### [Example 5]

A compound D-6 was synthesized according to the following procedure.

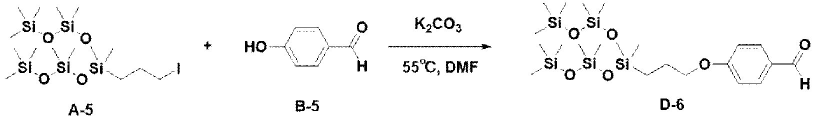

A compound D-6 was synthesized according to the same procedure as in the above-described [Synthesis of compound D-3], except that the compound A-2 was changed to the compound A-5 and the compound B-3 was changed to the compound B-5. The ¹H NMR measurement results of the compound D-6 are shown below.

¹H NMR (400 MHz, CDCl₃) δ ppm: 0.06 to 0.10 (m, 33H), 0.56 to 0.61 (m, 2H), 1.80 to 1.87 (m, 2H), 4.00 (t, 2H), 6.98 (d, 2H), 7.82 (d, 2H), 9.87 (s, 1H)

### [Example 6]

A compound D-7 was synthesized according to the following procedure.

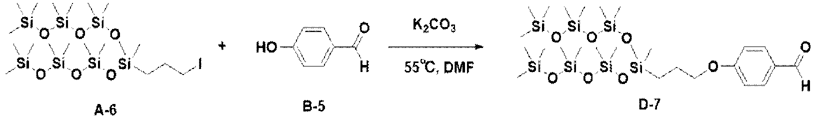

A compound D-7 was synthesized according to the same procedure as in the above-described [Synthesis of compound D-3], except that the compound A-2 was changed to the compound A-6 and the compound B-3 was changed to the compound B-5. The ¹H NMR measurement results of the compound D-7 are shown below.

¹H NMR (400 MHz, CDCl₃) δ ppm: 0.05 to 0.11 (m, 45H), 0.56 to 0.61 (m, 2H), 1.80 to 1.87 (m, 2H), 4.00 (t, 2H), 6.98 (d, 2H), 7.82 (d, 2H), 9.87 (s, 1H)

### [Example 7]

A compound D-8 was synthesized according to the following procedure.

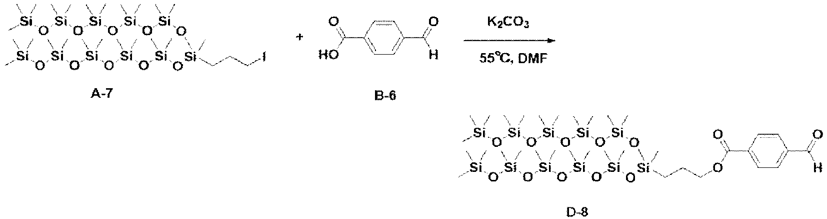

A compound D-8 was synthesized according to the same procedure as in the above-described [Synthesis of compound D-3], except that the compound A-2 was changed to the compound A-7 and the compound B-3 was changed to the compound B-6. The ¹H NMR measurement results of the compound D-8 are shown below.

¹H NMR (400 MHz, Acetone-d6) δ ppm: -0.03 to 0.07 (m, 69H), 0.59 to 0.64 (m, 2H), 1.77 to 1.85 (m, 2H), 4.24 (t, 2H), 8.00 (d, 2H), 8.11 (d, 2H), 10.1 (s, 1H)

### [Comparative Example 1]

A compound D-1 was synthesized according to the following procedure.

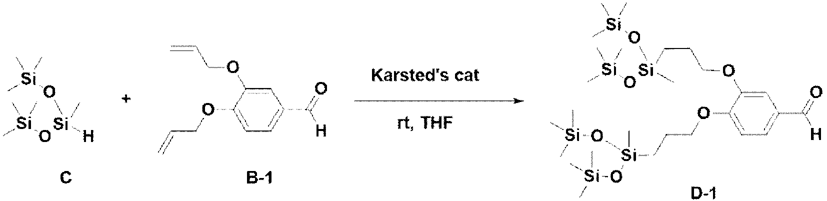

The compound C (47.0 mmol) and the compound B-1 (22.9 mmol) were dissolved in tetrahydrofuran (50 mL) under a nitrogen atmosphere, and further Karsted's catalyst (Pt 2% xylene solution, 100 µL) was added thereto under water cooling. The obtained reaction solution was stirred at room temperature for 2 hours, the solvent was distilled off, and the residue was purified by silica gel column chromatography (hexane/ethyl acetate = 9/1) to obtain a compound D-1 (yield: 29%). The ¹H NMR measurement results of the compound D-1 are shown below.

¹H NMR (400 MHz, CDCl₃) δ ppm: 0.04 to 0.10 (m, 42H), 0.56 to 0.60 (m, 4H), 1.82 to 1.93 (m, 4H), 4.00 to 4.06 (m, 4H), 6.94 (d, 1H), 7.38 to 7.43 (m, 2H), 9.83 (s, 1H)

Table 1 shows the compounds used for the synthesis of the compounds D-1 to D-8 and the yield thereof. It is noted that the compound C and the compound B-1 are comparative compounds, and are compounds different from the compound (4) and the compound (5), respectively.

From the results shown in the following tables, it was confirmed that a useful intermediate that can synthesize a compound having a siloxane structure with a high yield can be produced by the method for producing a compound according to the present invention.

**[Table 1]**

| Table 1 | Reaction raw material | | Product | Yield |
|---|---|---|---|---|
| | Compound (4) | Compound (5) | Compound (6) | |
| Comparative Example 1 | C | B-1 | D-1 | 29% |
| Example 1 | A-1 | B-2 | D-2 | 64% |
| Example 2 | A-2 | B-3 | D-3 | 63% |
| Example 3 | A-3 | B-4 | D-4 | 51% |
| Example 4 | A-4 | B-5 | D-5 | 61% |
| Example 5 | A-5 | B-5 | D-6 | 65% |
| Example 6 | A-6 | B-5 | D-7 | 63% |
| Example 7 | A-7 | B-6 | D-8 | 82% |

## Claims

1. A method for producing a compound, comprising:
step 1 of reacting a compound represented by Formula (1) with a compound represented by Formula (2) to obtain a compound represented by Formula (3); and
step 2 of obtaining a compound represented by Formula (4) from the compound represented by Formula (3), 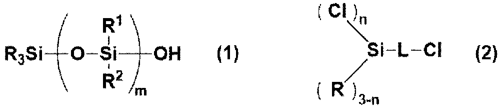 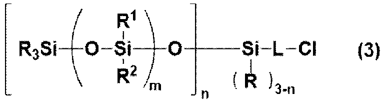 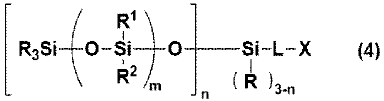
in Formulae (1) to (4), R's each independently represent an alkyl group,
in Formula (1) and Formulae (3) and (4), R¹ and R² each independently represent an alkyl group or -(O-SiR³R⁴)₁-O-Si(R^{S})₃, l represents an integer of 0 or more, R³ to R⁵ each independently represent an alkyl group,
m represents an integer of 0 or more,
in Formulae (2) to (4), L represents an alkylene group,
n represents an integer of 1 to 3, and
in Formula (4), X represents a bromine atom or an iodine atom.

2. The method for producing a compound according to claim 1, further comprising:
step 3 of reacting the compound represented by Formula (4) with a compound represented by Formula (5) to obtain a compound represented by Formula (6),
**Yₚ-Ar-A_{q}** **(5)** 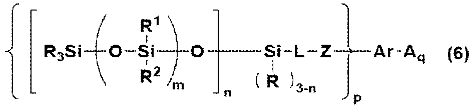
in Formula (5), Y's each independently represent a hydroxy group or a carboxy group,
in Formula (5) and Formula (6), Ar represents an aromatic ring,
A's each independently represent a substituent other than a carboxy group, in a case where A's represent a hydroxy group, Y's represent a carboxy group,
p represents an integer of 1 or more, q represents an integer of 0 or more,
in Formula (6), Z represents -O- or -OCO-,
R's each independently represent an alkyl group,
R¹ and R² each independently represent an alkyl group or -(O-SiR³R⁴)₁-O-Si(R^{S})₃, l represents an integer of 0 or more, R³ to R⁵ each independently represent an alkyl group,
m represents an integer of 0 or more,
L represents an alkylene group, and
n represents an integer of 1 to 3.

3. The method for producing a compound according to claim 1 or 2,
wherein L is an n-propylene group.

4. The method for producing a compound according to claim 1 or 2,
wherein R, R¹, and R² are a methyl group.

5. A compound represented by Formula (7), 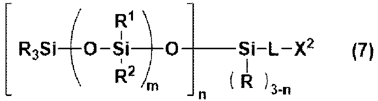
in Formula (7), R's each independently represent an alkyl group,
R¹ and R² each independently represent an alkyl group or -(O-SiR³R⁴)₁-O-Si(R^{S})₃, l represents an integer of 0 or more, R³ to R⁵ each independently represent an alkyl group,
m represents an integer of 0 or more,
L represents an alkylene group,
n represents an integer of 1 to 3, and
X² represents a chlorine atom, a bromine atom, or an iodine atom.

6. The compound according to claim 5,
wherein L is an n-propylene group.

7. The compound according to claim 5 or 6,
wherein R, R¹, and R² are a methyl group.
